# EUROPEAN PATENT SPECIFICATION

(11) **EP 1 100 316 B1**
(45) Date of publication and mention of the grant of the patent: **28.07.2004**
(21) Application number: 00927970.4
(22) Date of filing: 10.05.2000
(51) Int. Cl.: A01K 1/01

(54) **AN UNMANNED VEHICLE ADAPTED TO BE USED IN A STABLE, SUCH AS A COWSHED**
UNBEMANNTES FAHRZEUG ZUR ANWENDUNG IN EINEM STALL, WIE EINEM KUHSTALL
VEHICULE TELEGUIDE CON U POUR ETRE UTILISE DANS UNE ETABLE

(30) Priority: 25.05.1999 NL 1012141
(43) Date of publication of application: 23.05.2001
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000312
(87) International publication number: WO 2000/070936

(56) References cited:
- EP-A- 0 943 235
- WO-A-92/07154
- WO-A-97/31524
- DE-A- 4 425 924
- US-A- 3 805 462
- US-A- 4 745 714

## Description

The invention relates to an unmanned vehicle which is adapted to be used in a stable, such as a cowshed according to the preamble of claim 1.

Such a vehicle is known from DE-A-44 25 924. This document describes an autonomous vehicle with a manipulator arm. The arm is used as a carrier for a cleaning device, for example a brush. The arm is rotatably attached to the vehicle by means of a vertical shaft and comprises further several segments. Said segments are at their ends rotatably connected and their angle can independently be manipulated by means of motors or strings.

It is an objective of the intention to provide an alternative vehicle.

In accordance with the invention, this is achieved in that the manure displacing device comprises a windable carrier, one end of which is connected to the manure displacing member and whose other end is connected to the unmanned vehicle. The windable carrier has the advantage of occupying relatively little space, thus making it possible for the unmanned vehicle to be equipped with some more apparatuses.

According to a first embodiment of the invention, the windable carrier comprises at least one cable caterpillar. Such a cable caterpillar is used for storing cables and is employed e.g. in an industrial robot arm construction, such as a welding robot. One of the properties of such a cable caterpillar is that during movement of the robot arm construction the cables do not kink, but make a smooth curve. Another property of such a cable caterpillar is that it can only be wound in one direction, because the links of the cable caterpillar are blocked in the other direction. The latter property makes it possible to use the cable caterpillar as a rigid carrier for the manure displacing device. According to a second embodiment of the invention, the windable carrier comprises two cable caterpillars which are disposed one on top of the other. By placing two cable caterpillars on top of each other the entire carrier becomes rigid in all directions, while it still remains possible to wind or unwind the two caterpillars.

In accordance with a third embodiment of the invention, the windable carrier is constituted by a resilient strip material. In a preferred embodiment of the invention, the material is constituted by spring steel. For the purpose of making it possible for the windable carrier/carriers to be wound or unwound, they are disposed on a reel. Said reel is motor-driven for winding and unwinding the windable carrier. According to a further inventive feature, the manure displacing device comprises a telescopic carrier and/or a hingeable arm construction. In accordance with an inventive feature, the manure displacing device comprises a manure slide which is preferably made of rubber or synthetic material. According to again another inventive feature, it is also possible to provide the manure displacing device with motor-drivable manure displacing members. The motor-drivable manure displacing members have the advantage that, during cleaning, they do not need to be pressed on the stable floor with considerable force, like a manure slide. According to a further inventive feature, the manure displacing members are constituted by brushes. It is also possible for the manure displacing device to comprise a compressed air unit and/or a spraying unit by means of which the floor is cleaned with compressed air and/or liquid.

For the purpose of realizing a still better cleaning of the stable floor, according to an inventive feature, the manure displacing device comprises pressure setting means with the aid of which the force is set with which the manure displacing device is active on the stable floor. In accordance with a further inventive feature, the pressure setting means comprise a control cylinder. The pressure setting means are also used for positioning the manure displacing device.

In accordance with another aspect of the invention, the manure displacing device forms part of a wall of the unmanned vehicle. For the purpose of determining where in the stable there has to be cleaned, according to an inventive feature, the unmanned vehicle comprises detection means which are capable of observing the dirt present on the stable floor. According to a further inventive feature, the detection means comprise a camera, such as e.g. an infrared camera. It is further possible for the detection means to comprise a humidity meter with the aid of which the electric conductivity on a floor part in the stable is determined. By means of a dielectric measurement it is possible to determine whether the stable floor is contaminated with manure.

According to again another inventive feature, the unmanned vehicle comprises a second manure displacing device which is disposed under the vehicle. According to the invention, the second manure displacing device constitutes a support for the vehicle.

For the purpose of operating in a still more hygienic manner, the unmanned vehicle comprises cleaning and/or disinfecting means. According to a further inventive feature, the cleaning and/or disinfecting means comprise a spraying unit. With the aid of the spraying unit it is possible to spray a cleaning and/or a disinfecting liquid over the already cleaned stable floor. According to the invention, a favourable location for the cleaning and/or disinfecting means is on or near the manure displacing device. For the purpose of preventing the animals from damaging the unmanned vehicle, according to an inventive feature, the unmanned vehicle comprises signalling means which are adapted to keep animals at a distance from the unmanned vehicle. According to a further inventive feature, the signalling means are capable of emitting optical and/or acoustic signals. According to again another inventive feature, the signalling means comprise an electric shock device.

The invention will now be explained in further detail with reference to the accompanying drawings.
Figure 1 is a side view of the unmanned vehicle according to the invention, which vehicle is provided with a manure displacing device, and
Figure 2 is a plan view of the manure displacing device shown in Figure 1.

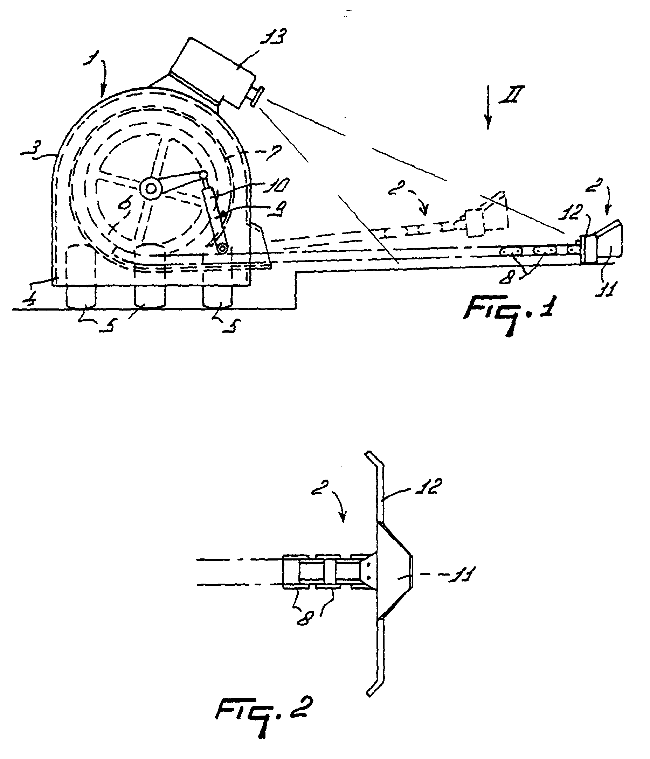

Figure 1 is a side view of a first unmanned vehicle 1 which is provided with a manure displacing device 2. The unmanned vehicle 1 comprises a housing 3 with a chassis 4 which is provided with wheels 5. The wheels 5 can separately be driven by non-shown motors.

In the housing 3 there is further arranged a reel 6 on which a windable carrier 7 is wound. In the present embodiment the windable carrier 7 is constituted by a cable caterpillar. One end of the cable caterpillar 7 is connected to the reel 6 and and its other end is connected to the manure displacing device 2. As shown in Figures 1 and 2, the cable caterpillar 7 comprises links 8 which are capable of hinging in one direction relative to each other.

The manure displacing device 2 is further provided with pressure setting means 9 with the aid of which the cable caterpillar can be lifted. In the present embodiment the pressure setting means 9 are constituted by a control cylinder 10. The pressure setting means 9 are also used for positioning the manure displacing device 2. Positioning of the manure displacing device 2 is effected by lifting the cable caterpillar 7 by means of the control cylinder 10 and by unwinding the cable caterpillar 7 by means of the reel 6 until it has reached the intended destination, whereupon the cable caterpillar 7 is moved to the stable floor by means of the control cylinder 10.

Because of the fact that a weight 11 is disposed on the manure displacing device 2 there is obtained sufficient pressure on the manure slide 12 belonging to the manure displacing device 2 to displace the manure over the floor. Displacing the manure over the floor takes place by winding up the cable caterpillar 7 by means of the reel 6.

On the housing 3 of the unmanned vehicle 1 there are further disposed detection means 13 with the aid of which dirt, such as manure, on the stable floor can be traced. In the present embodiment the detection means 13 comprise a camera. It is also possible to guide the unmanned vehicle 1 through the stable with the aid of the detection means 13.

## Claims

1. An unmanned vehicle (1) which is adapted to be used in a stable, such as a cowshed, said unmanned vehicle (1) being provided with a manure displacing device (2) which is capable of being moved to a place at a distance from the vehicle, **characterized in that** the manure displacing device (2) comprises a windable carrier (7), one end of which is connected to the manure displacing member (2) and whose other end is connected to the unmanned vehicle (1).

2. An unmanned vehicle as claimed in claim 1, **characterized in that** the windable carrier (7) comprises at least one cable caterpillar.

3. An unmanned vehicle as claimed in claim 2, **characterized in that** the windable carrier (7) comprises two cable caterpillars which are disposed one on top of the other.

4. An unmanned vehicle as claimed in claim 1, **characterized in that** the windable carrier (7) is constituted by a resilient strip material.

5. An unmanned vehicle as claimed in claim 4, **characterized in that** the material is constituted by spring steel.

6. An unmanned vehicle as claimed in any one of the preceding claims, **characterized in that** the windable carrier (7) is disposed on a reel (6).

7. An unmanned vehicle as claimed in claim 6, **characterized in that** the reel (6) is motor-drivable for winding and unwinding the carrier (7).

8. An unmanned vehicle as claimed in any one of the preceding claims, **characterized in that** the manure displacing device (2) comprises a manure slide (12) which is preferably made of rubber or synthetic material.

9. An unmanned vehicle as claimed in any one of the preceding claims, **characterized in that** the manure displacing device (2) comprises motor-drivable manure displacing members and/or a spraying unit and/or a compressed air unit.

10. An unmanned vehicle as claimed in claim 9, **characterized in that** the manure displacing members are constituted by brushes.

11. An unmanned vehicle as claimed in any one of the preceding claims, **characterized in that** the manure displacing device (2) comprises pressure setting means (9) for setting the force with which the manure displacing device (2) is active on a floor.

12. An unmanned vehicle as claimed in claim 11, **characterized in that** the pressure setting means (9) comprise a control cylinder (10).

13. An unmanned vehicle as claimed in any one of the preceding claims, **characterized in that** the manure displacing device (2) forms part of a wall of the unmanned vehicle (1).

14. An unmanned vehicle as claimed in any one of the preceding claims, **characterized in that** the unmanned vehicle (1) comprises detection means (13) for determining whether and/or where manure and/or any other dirt are/is present on the stable floor.

15. An unmanned vehicle as claimed in claim 14, **characterized in that** the detection means (13) comprise a camera, such as e.g. an infrared camera.

16. An unmanned vehicle as claimed in claim 14 or 15, **characterized in that** the detection means comprise a humidity meter for determining the electric conductivity on a floor part in the stable.

17. An unmanned vehicle as claimed in any one of the preceding claims, **characterized in that** the unmanned vehicle (1) comprises a second manure displacing device which is disposed under the vehicle.

18. An unmanned vehicle as claimed in claim 17, **characterized in that** the second manure displacing device constitutes a support for the vehicle.

19. An unmanned vehicle as claimed in any one of the preceding claims, **characterized in that** the unmanned vehicle (1) comprises cleaning and/or disinfecting means.

20. An unmanned vehicle as claimed in claim 19, **characterized in that** the cleaning and/or disinfecting means comprise a spraying unit.

21. An unmanned vehicle as claimed in claim 19 or 20, **characterized in that** the cleaning and/or disinfecting means are disposed on the manure displacing device (2).

22. An unmanned vehicle as claimed in any one of the preceding claims, **characterized in that** the unmanned vehicle (1) comprises signalling means which are adapted to keep the animals at a distance from the unmanned vehicle.

23. An unmanned vehicle as claimed in claim 22, **characterized in that** the signalling means emit optical and/or acoustic signals.

24. An unmanned vehicle as claimed in claim 22 or 23, **characterized in that** the signalling means comprise an electric shock device.

## Patentansprüche

1. Unbemanntes Fahrzeug (1), das zur Verwendung in einem Stall, wie z. B. einem Kuhstall, geeignet ist, wobei das unbemannte Fahrzeug (1) mit einer Mistverlagerungsvorrichtung (2) versehen ist, die geeignet ist, an einen Ort mit Abstand vom Fahrzeug bewegt zu werden,
**dadurch gekennzeichnet, daß** die Mistverlagerungsvorrichtung (2) einen aufwickelbaren Träger (7) umfaßt, dessen eines Ende mit dem Mistverlagerungsglied (2) und dessen anderes Ende mit dem unbemannten Fahrzeug (1) verbunden ist.

2. Unbemanntes Fahrzeug nach Anspruch 1,
**dadurch gekennzeichnet, daß** der aufwickelbare Träger (7) mindestens eine Kettenraupe umfaßt.

3. Unbemanntes Fahrzeug nach Anspruch 2,
**dadurch gekennzeichnet, daß** der aufwickelbare Träger (7) zwei Kettenraupen umfaßt, die übereinander angeordnet sind.

4. Unbemanntes Fahrzeug nach Anspruch 1,
**dadurch gekennzeichnet, daß** der aufwickelbare Träger (7) durch ein elastisches Flachmaterial gebildet ist.

5. Unbemanntes Fahrzeug nach Anspruch 4,
**dadurch gekennzeichnet, daß** das Material durch Federstahl gebildet ist.

6. Unbemanntes Fahrzeug nach einem der vorhergehenden Ansprüche,
**dadurch gekennzeichnet, daß** der aufwickelbare Träger (7) auf einer Trommel (6) angeordnet ist.

7. Unbemanntes Fahrzeug nach Anspruch 6,
**dadurch gekennzeichnet, daß** die Trommel (6) zum Aufwickeln und Abwickeln des Trägers (7) motorisch antreibbar ist.

8. Unbemanntes Fahrzeug nach einem der vorhergehenden Ansprüche,
**dadurch gekennzeichnet, daß** die Mistverlagerungsvorrichtung (2) einen Mistschieber (12) umfaßt, der vorzugsweise aus Gummi oder Kunststoff hergestellt ist.

9. Unbemanntes Fahrzeug nach einem der vorhergehenden Ansprüche,
**dadurch gekennzeichnet, daß** die Mistverlagerungsvorrichtung (2) motorisch antreibbare Mistverlagerungsglieder und/oder eine Sprüheinheit und/oder eine Drucklufteinheit umfaßt.

10. Unbemanntes Fahrzeug nach Anspruch 9,
**dadurch gekennzeichnet, daß** die Mistverlagerungsglieder durch Bürsten gebildet sind.

11. Unbemanntes Fahrzeug nach einem der vorhergehenden Ansprüche,
**dadurch gekennzeichnet, daß** die Mistverlagerungsvorrichtung (2) eine Druckeinstellvorrichtung (9) umfaßt, um die Kraft einzustellen, mit der die Mistverlagerungsvorrichtung (2) auf einem Boden wirksam ist.

12. Unbemanntes Fahrzeug nach Anspruch 11,
**dadurch gekennzeichnet, daß** die Druckeinstellvorrichtung (9) einen Steuerzylinder (10) umfaßt.

13. Unbemanntes Fahrzeug nach einem der vorhergehenden Ansprüche,
**dadurch gekennzeichnet, daß** die Mistverlagerungsvorrichtung (2) den Teil einer Wand des unbemannten Fahrzeugs (1) bildet.

14. Unbemanntes Fahrzeug nach einem der vorhergehenden Ansprüche,
**dadurch gekennzeichnet, daß** das unbemannte Fahrzeug (1) eine Ermittlungsvorrichtung (13) umfaßt, um zu ermitteln, ob und/oder wo sich Mist und/oder sonstiger Schmutz auf dem Stallboden befinden/befindet.

15. Unbemanntes Fahrzeug nach Anspruch 14,
**dadurch gekennzeichnet, daß** die Ermittlungsvorrichtung (13) eine Kamera, wie z. B. eine Infrarot-Kamera, umfaßt.

16. Unbemanntes Fahrzeug nach Anspruch 14 oder 15,
**dadurch gekennzeichnet, daß** die Ermittlungsvorrichtung einen Feuchtigkeitsmesser zum Ermitteln der elektrischen Leitfähigkeit auf einem Teil des Bodens im Stall umfaßt.

17. Unbemanntes Fahrzeug nach einem der vorhergehenden Ansprüche,
**dadurch gekennzeichnet, daß** das unbemannte Fahrzeug (1) eine zweite Mistverlagerungsvorrichtung umfaßt, die unter dem Fahrzeug angeordnet ist.

18. Unbemanntes Fahrzeug nach Anspruch 17,
**dadurch gekennzeichnet, daß** die zweite Mistverlagerungsvorrichtung eine Stütze für das Fahrzeug bildet.

19. Unbemanntes Fahrzeug nach einem der vorhergehenden Ansprüche,
**dadurch gekennzeichnet, daß** das unbemannte Fahrzeug (1) eine Reinigungs- und/oder Desinfektionsvorrichtung umfaßt.

20. Unbemanntes Fahrzeug nach Anspruch 19,
**dadurch gekennzeichnet, daß** die Reinigungs- und/oder Desinfektionsvorrichtung eine Sprüheinheit umfaßt.

21. Unbemanntes Fahrzeug nach Anspruch 19 oder 20,
**dadurch gekennzeichnet, daß** die Reinigungs- und/oder Desinfektionsvorrichtung auf der Mistverlagerungsvorrichtung (2) angeordnet ist.

22. Unbemanntes Fahrzeug nach einem der vorhergehenden Ansprüche,
**dadurch gekennzeichnet, daß** das unbemannte Fahrzeug (1) eine Signalvorrichtung umfaßt, die geeignet ist, die Tiere auf Abstand zu dem unbemannten Fahrzeug zu halten.

23. Unbemanntes Fahrzeug nach Anspruch 22,
**dadurch gekennzeichnet, daß** die Signalvorrichtung optische und/oder akustische Signale aussendet.

24. Unbemanntes Fahrzeug nach Anspruch 22 oder 23,
**dadurch gekennzeichnet, daß** die Signalvorrichtung eine Elektroschockvorrichtung umfaßt.

## Revendications

1. Véhicule téléguidé (1) qui est adapté pour être utilisé dans une écurie, comme une étable, ledit véhicule téléguidé (1) étant pourvu d'un dispositif de déplacement du fumier (2) qui est susceptible d'être déplacé à un endroit à une certaine distance du véhicule, **caractérisé en ce que** le dispositif de déplacement du fumier (2) comprend un chargeur enroulable (7), dont une extrémité est reliée à l'élément de déplacement du fumier (2) et dont l'autre extrémité est reliée au véhicule téléguidé (1).

2. Véhicule téléguidé selon la revendication 1, **caractérisé en ce que** le chargeur enroulable (7) comprend au moins une chenille à câble.

3. Véhicule téléguidé selon la revendication 2, **caractérisé en ce que** le chargeur enroulable (7) comprend deux chenilles à câble qui sont disposées l'une sur l'autre.

4. Véhicule téléguidé selon la revendication 1, **caractérisé en ce que** le chargeur enroulable (7) est constitué par une bande résiliente.

5. Véhicule téléguidé selon la revendication 4, **caractérisé en ce que** la bande est composée d'acier à ressorts.

6. Véhicule téléguidé selon l'une quelconque des revendications précédentes, **caractérisé en ce que** le chargeur enroulable (7) est disposé sur un dévidoir (6).

7. Véhicule téléguidé selon la revendication 6, **caractérisé en ce que** le dévidoir (6) est commandé par un moteur pour enrouler et dérouler le chargeur (7).

8. Véhicule téléguidé selon l'une quelconque des revendications précédentes, **caractérisé en ce que** le dispositif de déplacement du fumier (2) comprend un glissoir à fumier (12) qui est de préférence réalisé en caoutchouc ou en matière synthétique.

9. Véhicule téléguidé selon l'une quelconque des revendications précédentes, **caractérisé en ce que** le dispositif de déplacement du fumier (2) comprend des éléments de déplacement du fumier et / ou une unité de pulvérisation et / ou une unité à air comprimé commandés par un moteur.

10. Véhicule téléguidé selon la revendication 9, **caractérisé en ce que** les éléments de déplacement du fumier sont composés de brosses.

11. Véhicule téléguidé selon l'une quelconque des revendications précédentes, **caractérisé en ce que** le dispositif de déplacement du fumier (2) comprend des moyens de réglage de pression (9) destinés à régler la force avec laquelle le dispositif de déplacement du fumier (2) agit sur un sol.

12. Véhicule téléguidé selon la revendication 11, **caractérisé en ce que** les moyens de réglage de pression (9) comprennent un cylindre de contrôle (10).

13. Véhicule téléguidé selon l'une quelconque des revendications précédentes, **caractérisé en ce que** le dispositif de déplacement du fumier (2) forme une partie d'une paroi du véhicule téléguidé (1).

14. Véhicule téléguidé selon l'une quelconque des revendications précédentes, **caractérisé en ce que** le véhicule téléguidé (1) comprend des moyens de détection (13) destinés à déterminer si, et / ou, où du fumier et / ou de toute autre saleté est / sont présent(es) sur le sol de l'écurie.

15. Véhicule téléguidé selon la revendication 14, **caractérisé en ce que** les moyens de détection (13) comprennent une caméra, comme par exemple une caméra infrarouge.

16. Véhicule téléguidé selon l'une quelconque des revendications 14 et 15, **caractérisé en ce que** les moyens de détection comprennent un hygromètre destiné à déterminer la conductivité électrique sur une partie du sol dans l'écurie.

17. Véhicule téléguidé selon l'une quelconque des revendications précédentes, **caractérisé en ce que** le véhicule téléguidé (1) comprend un second dispositif de déplacement du fumier qui est disposé sous le véhicule.

18. Véhicule téléguidé selon la revendication 17, **caractérisé en ce que** le second dispositif de déplacement du fumier constitue un support pour le véhicule.

19. Véhicule selon l'une quelconque des revendications précédentes, **caractérisé en ce que** le véhicule téléguidé (1) comprend des moyens de nettoyage et / ou de désinfection.

20. Véhicule téléguidé selon la revendication 19, **caractérisé en ce que** les moyens de nettoyage et / ou de désinfection comprennent une unité de pulvérisation.

21. Véhicule téléguidé selon l'une quelconque des revendications 19 et 20, **caractérisé en ce que** les moyens de nettoyage et / ou de désinfection sont disposés sur le dispositif de déplacement du fumier (2).

22. Véhicule téléguidé selon l'une quelconque des revendications précédentes, **caractérisé en ce que** le véhicule téléguidé (1) comprend des moyens de signalisation qui sont adaptés pour tenir les animaux à une certaine distance du véhicule téléguidé.

23. Véhicule téléguidé selon la revendication 22, **caractérisé en ce que** les moyens de signalisation émettent des signaux optiques et / ou acoustiques.

24. Véhicule téléguidé selon l'une quelconque des revendications 22 et 23, **caractérisé en ce que** les moyens de signalisation comprennent un dispositif à chocs électriques.
